(19) Europäisches Patentamt
European Patent Office
Office européen des brevets

(11) **EP 2 159 606 A2**

(12) **EUROPEAN PATENT APPLICATION**

(43) Date of publication:
**03.03.2010 Bulletin 2010/09**

(51) Int Cl.:
*G01V 3/12* (2006.01)

(21) Application number: **09168486.0**

(22) Date of filing: **24.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.08.2008 US 231118**

(71) Applicant: **MTEM Ltd.**
**Edinburgh**
**EH11 4EP (GB)**

(72) Inventors:
- **Wright, David Allan**
  **East Lothian**
  **EH39 4QJ (GB)**
- **Ziolkowski, Antoni Marjan**
  **Edinburgh**
  **EH16 5QR (GB)**

(74) Representative: **Lord, Michael**
**Gill Jennings & Every LLP**
**Broadgate House**
**7 Eldon Street**
**London EC2M 7LH (GB)**

(54) **Method for Attenuating Correlated Noise in Controlled Source Electromagnetic Survey Data**

(57) A method for attenuating correlated noise in transient electromagnetic survey signals includes producing, from a transient electromagnetic signal measured by a first receiver, an estimate of the Earth response and an estimate of the correlated noise from a portion of the signal occurring before onset of an Earth response, and/or after the Earth response has substantially decayed. An estimate of the correlated noise is determined over the entire measured signal from the first receiver using the estimate of the Earth response. The noise estimate from the entire signal and the portion estimate are used to estimate correlated noise in transient signals from at least a second receiver.

FIG. 1

## Description

Field of the Invention

The invention relates generally to the field of electromagnetic surveying of formations in the Earth's subsurface. More particularly, the invention relates to method for attenuating certain types of noise from controlled source electromagnetic survey data.

Background Art

Electromagnetic surveying is used for, among other purposes, determining the presence of hydrocarbon bearing structures in the Earth's subsurface. Electromagnetic surveying includes what are called "controlled source" survey techniques. Controlled source electromagnetic surveying techniques include imparting an electric current or a magnetic field into the Earth, when such surveys are conducted on land, or imparting the same into sediments below the water bottom (sea floor) when such surveys are conducted in a marine environment. The techniques include measuring voltages and/or magnetic fields induced in electrodes, antennas and/or magnetometers disposed at the Earth's surface, on the sea floor or at a selected depth in the water. The voltages and/or magnetic fields are induced by interaction of the electromagnetic field caused by the electric current and/or magnetic field imparted into the Earth's subsurface (through the water bottom in marine surveys) with the subsurface Earth formations.

Marine controlled source electromagnetic surveying known in the art includes imparting alternating electric current into the sediments below the water bottom by applying current from a source, usually disposed on a survey vessel, to a bipole electrode towed by the survey vessel. A bipole electrode is typically an insulated electrical cable having two electrodes thereon at a selected spacing, sometimes 300 to 1000 meters or more. The alternating current has one or more selected frequencies, typically within a range of about 0.1 to 100 Hz. A plurality of detector electrodes is disposed on the water bottom at spaced apart locations, and the detector electrodes are connected to devices that record the voltages induced across various pairs of such electrodes. Such surveying is known as frequency domain controlled source electromagnetic surveying.

Another technique for electromagnetic surveying of subsurface Earth formations known in the art is transient controlled source electromagnetic surveying. In transient controlled source electromagnetic surveying, electric current can be imparted into the Earth's subsurface using electrodes on a cable similar to those explained above as used for frequency domain surveying. The electric current may be direct current (DC). At a selected time or times, the electric current is switched off, and induced voltages are measured, typically with respect to time over a selected time interval, using electrodes disposed on the water bottom as previously explained with reference to frequency domain surveying. Structure and composition of the Earth's subsurface are inferred by the time distribution of the induced voltages. t-CSEM surveying techniques are described, for example, in Strack, K.-M. (1992), Exploration with deep transient electromagnetics, Elsevier, 373 pp. (reprinted 1999).

A source of noise in controlled source electromagnetic surveying is naturally occurring electromagnetic fields called magnetotelluric fields. Magnetotelluric fields are believed to result from interaction of electromagnetic activity in the ionosphere with the electrically conducting formations in the Earth's subsurface. Correlated noise, especially magnetotelluric fields, is a particular issue in transient electromagnetic data. Magnetotelluric noise appears in such data at about 1 Hz uppermost frequency and increases in amplitude approximately as the inverse of the frequency. 1 Hz and below is the frequency band of much transient controlled source electromagnetic survey data. The bandwidth of the impulse response of transient electromagnetic survey data generally decreases in frequency with respect to the depth in the subsurface of target rock formations and as the overburden (materials above the target) become more electrically conductive. In shallow water (approx 100 m) marine electromagnetic survey data, for example, the water has almost no attenuating effect on the magnetotelluric fields. This is in contrast to water of 2 km depth or more where the magnetotelluric field noise at the sea floor is greatly attenuated by the layer of conductive sea water.

It is known in the art that the magnetotelluric field noise, specifically, the induced electric field therefrom, is substantially coherent over quite large distances, as shown in noise records from survey data recorded in the North Sea. See, for example, Wright, D. and Ziolkowski, A., 2007, Suppression of noise in multi transient EM data, Expanded Abstracts, SEG San Antonio Annual Meeting. It is desirable to have a method for attenuating correlated noise such as magnetotelluric noise from controlled source electromagnetic survey data.

## Summary of the Invention

A method for attenuating correlated noise in transient electromagnetic survey signals according to one aspect of the invention includes producing, from a transient electromagnetic signal measured by a first receiver, an estimate of the Earth response and an estimate of the correlated noise from a portion of the signal occurring before onset of an Earth response, and/or after the Earth response has substantially decayed. An estimate of the correlated noise is determined over the entire measured signal from the first receiver using the estimate of the Earth response. The noise estimate from the entire signal and the portion estimate are used to estimate correlated noise in transient signals from at least a second receiver.

A method for electromagnetic surveying according to another aspect of the invention includes disposing an electromagnetic transmitter and a plurality of spaced apart electromagnetic receivers above a portion of the Earth's subsurface to be surveyed. At selected times electric current is passed through the transmitter. The current includes at least one switching event to induce transient electromagnetic effects in the subsurface portion. Signals are received at each of the plurality of receivers in response to the current passed through the transmitter. An estimate is made of the Earth response and an estimate of the correlated noise is made from a portion of the signal occurring before onset of an Earth response and/or after the Earth response has substantially decayed from a first one of the receivers. An estimate of the correlated noise is then determined over the entire measured signal from the first receiver using the estimate of the Earth response. The noise estimate from the entire signal and the portion estimate are used to estimate correlated noise in transient signals from at least a second one of the receivers.

Other aspects and advantages of the invention will be apparent from the following description and the appended claims.

**Brief Description of the Drawings**

FIG. 1 shows schematically an example of marine electromagnetic surveying.

FIG. 2A shows magnetotelluric signals in a plurality of electromagnetic signal measurements.

FIG. 2B shows the signal measurements of FIG. 2A which also now include modeled transient controlled source electromagnetic signals.

FIG. 3A shows measured transient controlled source electromagnetic signals after deconvolution for the measured source input current.

FIG. 3B shows the measurements of FIG. 3A after removal of the correlated magnetotelluric noise.

FIG. 4 shows a graph of transient controlled source electromagnetic formation response with magnetotelluric noise, a graph of the formation response with the noise attenuated, and a fitted noise curve.

FIG. 5 is a flow chart of an example implementation of the method.

**Detailed Description**

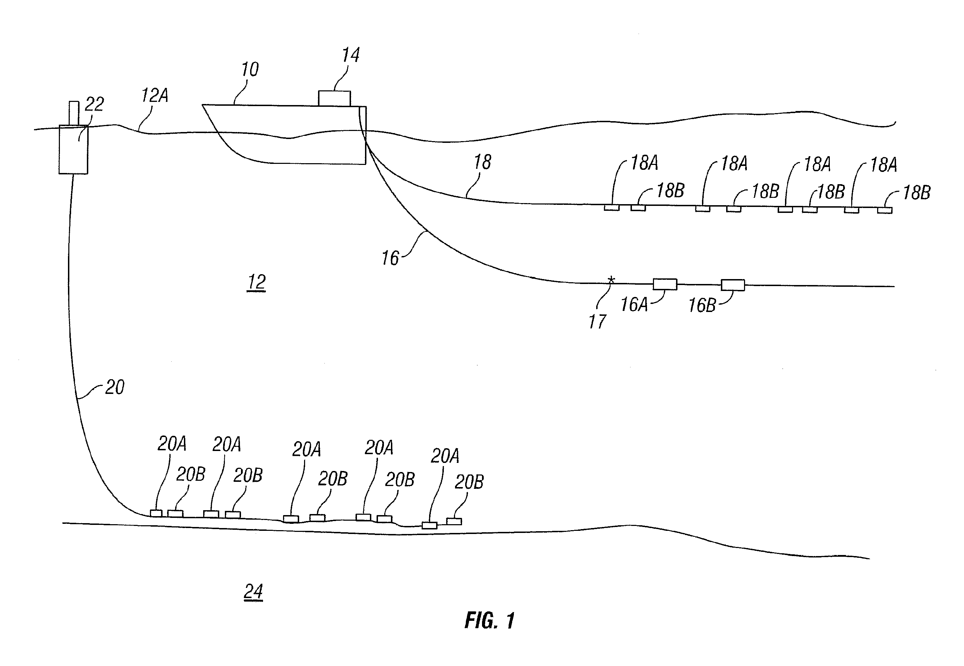

FIG. 1 shows an example marine electromagnetic survey system that may acquire transient controlled source electromagnetic survey signals for processing according to the invention. The system may include a survey vessel 10 that moves along the surface 12A of a body of water 12 such as a lake or the ocean. The vessel 10 may include thereon equipment, referred to for convenience as a "recording system" and shown generally at 14, for generating electromagnetic signals to be imparted into formations 24 below the bottom of the water 12 and for recording the responses therefrom. The recording system 14 may include (none shown separately for clarity of the illustration) navigation devices to determine the geodetic position of the vessel 10; for determining geodetic position and/or heading of one or more electromagnetic transmitters and receivers (described below); devices for imparting electric current to the transmitter(s); and data storage equipment for recording signals detected by the one or more receivers.

The electromagnetic transmitter in the present example may be a bipole electrode, shown at 16A, 16B disposed along a cable 16 towed by the vessel 10. At selected times, the recording system 14 may pass electric current through the electrodes 16A, 16B. The current is preferably configured to induce transient electromagnetic fields in the formations 24. Examples of such current include switched direct current, wherein the current may be switched on, switched off, reversed polarity, or an extended set of switching events such as a pseudo random binary sequence ("PRBS").

In the present example, the vessel 10 may tow one or more receiver cables 18 having thereon a plurality of bipole electrodes 18A, 18B at spaced apart positions along the cable. The bipole electrodes 18A, 18B will have voltages imparted across them related to the amplitude of the electric field component of the electromagnetic field emanating from the formations 24. The recording system 14 on the vessel 10 may include, as explained above, devices for recording signals generated by the electrodes 18A, 18B. The recording of each receiver's response is typically indexed with respect to a reference time such as a current switching event in the transmitter current. A sensor 17 such as a magnetic field sensor (magnetometer) or current meter may be disposed proximate the transmitter and may be used to measure a parameter related to the amount of current flowing through the transmitter, the measurements of which may be used in processing the receiver signals as explained below.

In the present example, in substitution of or in addition to the receiver cable 18 towed by the vessel 10, a water bottom cable 20 may be disposed along the bottom of the water 12, and may include a plurality of bipole electrodes 20A, 20B similar in configuration to the electrodes 18A, 18B on the towed cable. The electrodes 20A, 20B may be in signal communication with a recording buoy 22 or similar device either near the water surface 12A or on the water bottom that may record signals detected by the electrodes 20A, 20B.

It will be appreciated by those skilled in the art that the invention is not limited in scope to the transmitter and receiver arrangements shown in FIG. 1. Other examples may use, in substitution of or in addition to the bipole electrodes shown in FIG. 1, wire coils or wire loops for the transmitter to impart a time varying magnetic field into the formations 24. The receiver cables 18, 20 may include other sensing devices, such as magnetometers or wire loops or coils to detect the magnetic field component of the induced electromagnetic field from the formation 24.

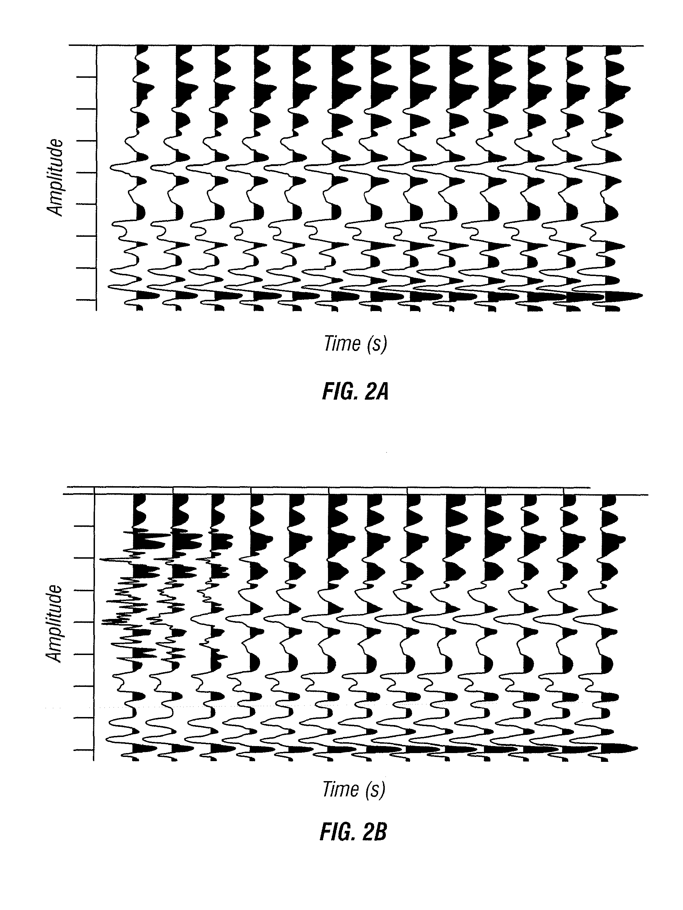

FIG. 2A shows a graph of example electromagnetic signals measured with a receiver system such as the one shown in FIG. 1. The curves in FIG. 2A represent measured voltage (horizontal axis) with respect to time (vertical axis). As explained above, the time is typically indexed to a switching event in the transmitter current. In the example of FIG. 2A, no electromagnetic energy is imparted into the subsurface by a transmitter; the signals measured as shown in FIG. 2A thus are naturally occurring (magnetotelluric) signals plus uncorrelated noise. FIG. 2B shows a graph of the same signals shown FIG. 2A, but in which modeled transient controlled source electromagnetic responses, produced by modeling the energizing of the transmitter, are also present. The present invention provides a method to attenuate a substantial portion of the naturally occurring signal response of FIG. 2A, which may be referred to as "correlated noise", from the total measured transient electromagnetic response as simulated in FIG. 2B.

The response that is measured at each receiver (e.g., electrode pairs 20A, 20B in FIG. 1) may be mathematically expressed as a combination of signal components as follows:

$$E(r_1,t) = S(t) * G(r_1,t) + MT(r_1,t) + N(r_1,t)$$
$$E(r_2,t) = S(t) * G(r_2,t) + MT(r_2,t) + N(r_2,t)$$
$$.$$
$$.E(r_n,t) = S(t) * G(r_n,t) + MT(r_n,t) + N(r_n,t)$$

$$(1)$$

in which $E(r_k, t)$ for $k = 1, 2, \ldots, n$ represents the measured electric field (e.g., in volts/m for electrode receivers as shown in FIG. 1) at each receiver $k$, after normalizing by the receiver length (e.g., electrode spacing) in meters. The parameter $r_k$, for $k = 1, 2, \ldots, n$ represents the lateral distance between the transmitter and each receiver, called "offset", and in the present example, the offsets become progressively larger corresponding to the receiver index, that is, $r_1 < r_2 < \ldots < r_n$. The parameter $S(t)$ represents the current applied to the transmitter with respect to time (e.g., as measured by the sensor described above), $G(r_k, t)$, $k = 1, 2, \ldots, n$ represents the Earth's true electromagnetic transient impulse response for each receiver, $MT(r_k,t)$, $k = 1, 2, \ldots, n$ represents the correlated noise (e.g., magnetotelluric noise) in each receiver signal, and $N(r_n, t)$, $k = 1, 2, \ldots, n$ represents uncorrelated or random noise in each receiver signal. The $t$ index in each of the foregoing expressions indicates that each quantity is a function of time, typically indexed with respect to the same current switching event in the transmitter current.

The objective of the method of the invention is to attenuate the correlated noise and to recover the Earth's impulse response from each receiver's signals. In the foregoing expressions as well as those following in this description the symbol * represents convolution. A first element of the method may be to deconvolve the measured receiver signals with a signal corresponding to the transmitter current, $S(t)$, which signal may be measured as explained above, to obtain an apparent transient response for each receiver. The deconvolution may be represented by the expressions:

$$Y(r1,t) = f(t) * E(r1,t) = G(r1,t) + MTf(r1,t) + Nf(r1,t)$$
$$Y(r2,t) = f(t) * E(r2,t) = G(r2,t) + MTf(r2,t) + Nf(r2,t)$$
$$.$$
$$Y(r_n,t) = f(t) * E(r_n,t) = G(r_n,t) + MTf(r_n,t) + Nf(r_n,t)$$

$$(2)$$

in which the inverse filter $f(t)$ of $S(t)$ is defined as:

$$f(t) * S(t) = \delta(t)$$

$$(3)$$

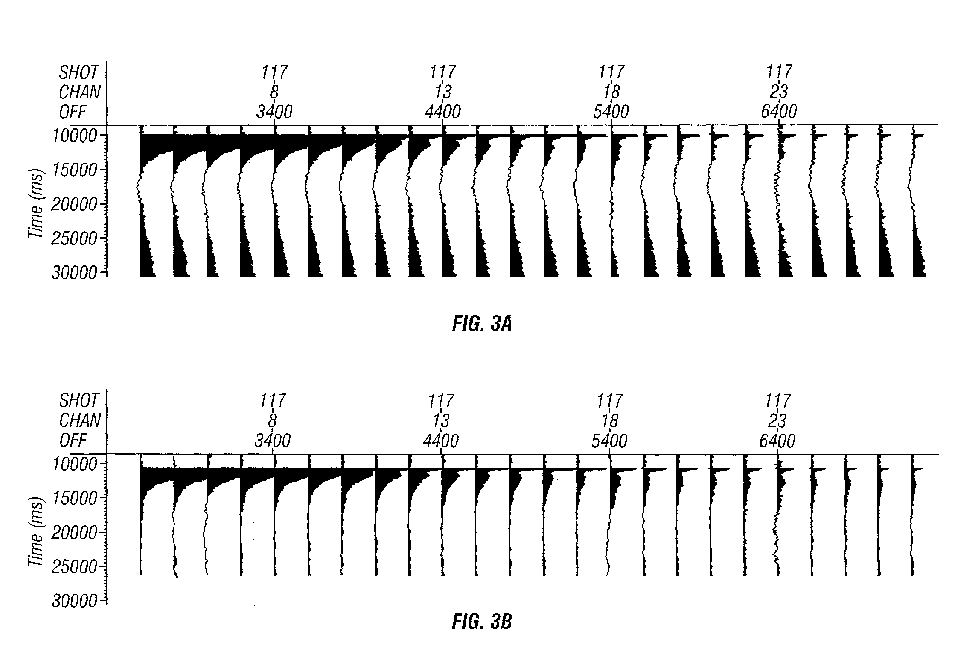

The foregoing deconvolution may be performed, for example, as described in U.S. Patent No. 6,914,433 issued to Wright et al. FIG. 3A shows an example of such deconvolution applied to an example of actual data in which correlated noise is present. A method according to the invention can attenuate correlated noise by exploiting the fact that at small enough offset $r$, the Earth's impulse response $G(r,t)$ is relatively short duration, and thus the correlated noise in such receiver response may be estimated from such receiver's recorded response either before the arrival in time of the transient Earth response or during a time after the transient response has substantially decayed. It is assumed that at a short offset $r_s$ the signal-to-noise ratio is relatively high, such that:

$$G(r_s,t) >> MT(r_s,t) + n(r_s,t) \qquad (4)$$

It is normally the case that $s = 1$, meaning that signals from the shortest offset receiver are used, but it may be that the least noisy, most suitable signals are from some other offset receiver, therefore, the invention is not limited to using signals from the shortest offset receiver in the described procedure. In order to attenuate the residual correlated noise from the receiver signals at offset $r_s$, non-linear curve fitting may be performed on the impulse response at offset $r_s$ to recover a response that is substantially smooth. A suitable mathematical function may be used. It is preferred to use a function that is similar in shape to the impulse response of a half-space $G_H(r,{}_t)$, which is described in Appendix D of Ziolkowski, A., Hobbs, B.A., Wright, D., 2007, Multitransient electromagnetic demonstration survey in France, Geophysics, 72, pp 197-209. Such function may be represented by an expression similar to the following:
$$G_H(r,t) = \frac{\mu}{8\pi}\left(\frac{\mu\sigma}{\pi}\right)^{\frac{1}{2}}\exp\left(-\frac{r^2\mu\sigma}{4t}\right)t^{-\frac{5}{2}}, \qquad (5)$$

in which $\mu$ and $\sigma$ are the magnetic permeability and the electrical conductivity, respectively, of the half space. One example of curve-fitting is to assume that $G(r_s,t)$ has the general form,
[0031]

$$G(t) = A\exp\left(\frac{B}{t}\right)t^C \qquad (6)$$

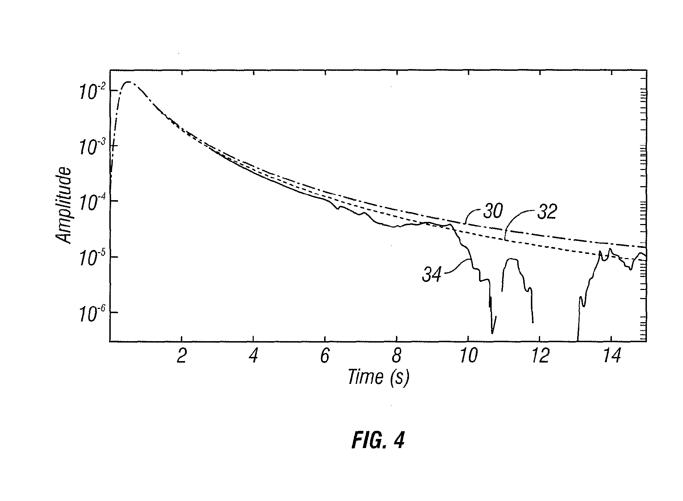

in which the coefficients A, B, and C are unknown. In such examples, curve-fitting includes finding the foregoing coefficients such that the misfit between the curve and the measured signals, including the noise, is a minimum. The foregoing example is only one possible technique for determining the noise in receiver signals. Other techniques will occur to those skilled in the art. An example of the foregoing is shown in the graph of FIG. 4, wherein a correlated, noise-free analytic function is shown at curve 30, the simulated receiver response including correlated noise is shown at curve 34, and the result of curve fitting is shown at curve 32. The curve-fitted response may be represented by the variable $\hat{G}(r_s,t)$ An estimate of the correlated noise in the deconvolved signals in the short offset receiver signals may then obtained by subtracting $\hat{G}(r_s,t)$ from the deconvolved signals:

$$\hat{MT}f(r_s,t) = Y(r_s,t) - \hat{G}(r_s,t) \qquad (7)$$

Using the fact that the noise to be attenuated is correlated, it is possible to use the noise estimate determined from the short offset receiver signals to estimate the correlated noise in any or all of the other receiver signals. After a certain period of time in the recorded receiver signals, any transient field induced response will decay to an insignificant amplitude. After such time, and to the end or recording of each receiver signal, therefore, any measured voltages will be substantially only the result of correlated and uncorrelated noise. In the time period before the start of the Earth response transient signal, the signals are also substantially only noise. Using a selected time period ("time window") generally before the start of the Earth response or near the end of each of the recorded receiver signals, filters $f_{sk}(t)$ can be determined that predict the correlated noise in each other receiver's signal $k = 1, 2, ... , n$ from the above determined estimate of the noise in the short(est) offset receiver signals. The computation of such filters may be, for example, well-known Wiener filters. See, for example, Norman Wiener, 1949, Time Series, The MIT Press, Massachusetts Institute of Technology, Cambridge, MA. The filters thus determined can be convolved with the full estimated noise from the short offset receiver signals to estimate the noise any other receiver's signal according to an expression such as:

$$\hat{MTf}(r_k, t) = f_{sk}(t) * \hat{MTf}(r_s, t), \ k = 1, 2, \ldots, n, \ k \neq s \tag{8}$$

The estimated noise for each receiver signal determined as explained above may then be subtracted from the deconvolved signals $Y(r_k, t)$ for such receiver to obtain an estimate of the Earth's impulse response for each receiver as shown in the following expression:

$$\overline{G}(r_k, t) = Y(r_k, t) - \hat{MTf}(r_k, t), \ k = 1, 2, \ldots, n; \ k \neq s \tag{9}$$

The result of applying the foregoing noise removal process to the data of FIG. 3A is shown in FIG. 3B.

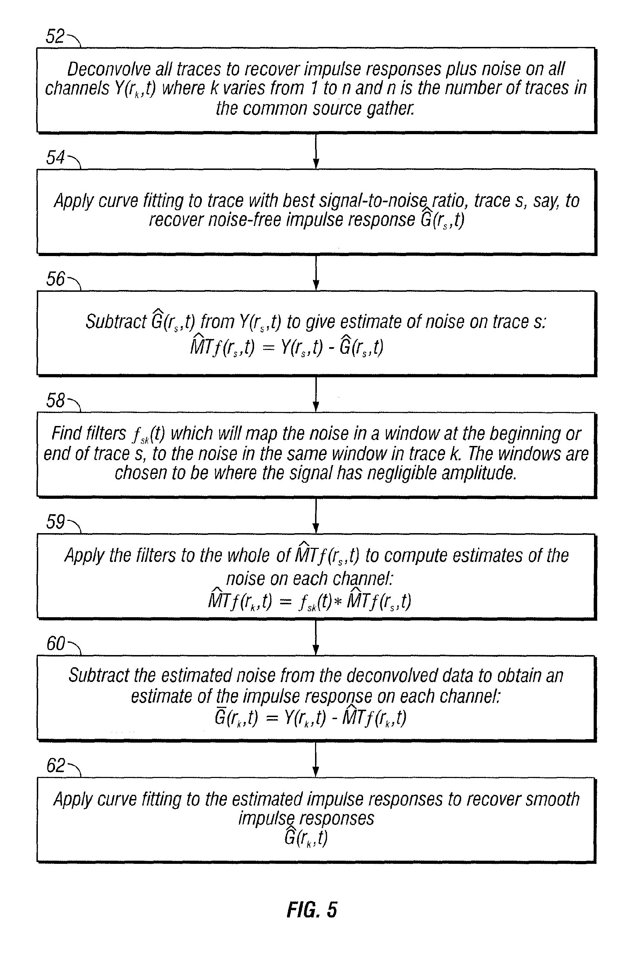

FIG. 5 is a flow chart of an example implementation of the method. At 52, signals from each receiver are deconvolved with the transmitter current signal (which may be measured). At 54, curve fitting is applied to the receiver signal with the best signal-to-noise ratio (normally at the shortest offset) to estimate the Earth's impulse response substantially in the absence of correlated noise. At 56, the estimate of the noise-attenuated Earth's impulse response is subtracted from the deconvolved measured electromagnetic response signals to obtain an estimate of the noise present in the deconvolved measured signals. At 58, filters are determined that map the noise in a selected time window (before the onset of the Earth response and/or after the transient signal has substantially decayed) in the receiver signal with the best signal-to-noise ratio to a corresponding time window in each other receiver's signals. The filters are applied, at 59, to the noise estimate at 56 to calculate an estimate of the correlated noise in each receiver's signal. At 60, the estimate of correlated noise in each receiver signal may be subtracted from the deconvolved response for each receiver signal to obtain an estimate of the Earth's impulse response from each receiver signal. At 62, curve fitting may be used to recover a "smooth" impulse response.

Methods according to the invention may provide controlled source electromagnetic survey measurements that have reduced effect of correlated noise.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for attenuating correlated noise in transient electromagnetic survey signals, comprising:

   producing, from a transient electromagnetic signal measured by a first receiver an estimate of the Earth response and an estimate of the correlated noise from a portion of the signal occurring before onset of an Earth response and/or after the Earth response has substantially decayed;
   determining an estimate of the correlated noise over the entire measured signal from the first receiver using the estimate of the Earth response; and
   using the noise estimate from the entire signal and the portion estimate to estimate correlated noise in transient signals from at least a second receiver.

2. The method of claim 1 wherein transient electromagnetic signals are measured by a plurality of receivers spaced apart from a transmitter by selected distances.

3. The method of claim 1 wherein the first receiver is closer to a transmitter than any other receiver.

4. The method of claim 1 further comprising using the noise estimate from the first receiver to determine a noise attenuated transient electromagnetic response therefrom.

5. The method of claim 1 further comprising using the noise estimate from the at least a second receiver to determine a noise attenuated response therefrom.

6. The method of claim 1 further comprising determining an Earth transient electromagnetic response by deconvolving a parameter related to an amount of current passed through an electromagnetic transmitter with a voltage measured by the first receiver.

7. A method for electromagnetic surveying, comprising:

    disposing an electromagnetic transmitter and a plurality of spaced apart electromagnetic receivers above a portion of the Earth's subsurface to be surveyed;
    at selected times passing electric current through the transmitter, the current including at least one switching event to induce transient electromagnetic effects in the subsurface portion;
    measuring signals at each of the plurality of receivers in response to the current passed through the transmitter;
    producing an estimate of the Earth response and an estimate of the correlated noise from a portion of the signal occurring before onset of the Earth response and/or after the Earth response has substantially decayed from a first one of the receivers;
    determining an estimate of the correlated noise over the entire measured signal from the first receiver using the estimate of the Earth response; and
    using the noise estimate from the entire signal and the portion estimate to estimate correlated noise in transient signals from at least a second one of the receivers.

8. The method of claim 7 wherein the first receiver is closer to a transmitter than any other receiver.

9. The method of claim 7 further comprising using the noise estimate from the first receiver to determine a noise attenuated transient electromagnetic response therefrom.

10. The method of claim 7 further comprising using the noise estimate from the at least a second receiver to determine a noise attenuated response therefrom.

11. The method of claim 7 further comprising determining an Earth transient electromagnetic response by deconvolving a parameter related to an amount of current passed through an electromagnetic transmitter with a voltage measured by the first receiver.

FIG. 1

*Time (s)*

**FIG. 2A**

*Time (s)*

**FIG. 2B**

*FIG. 3A*

*FIG. 3B*

FIG. 4

52 ⌐

Deconvolve all traces to recover impulse responses plus noise on all channels $Y(r_k,t)$ where $k$ varies from 1 to n and n is the number of traces in the common source gather.

54 ⌐

Apply curve fitting to trace with best signal-to-noise ratio, trace s, say, to recover noise-free impulse response $\hat{G}(r_s,t)$

56 ⌐

Subtract $\hat{G}(r_s,t)$ from $Y(r_s,t)$ to give estimate of noise on trace s:
$$\widehat{MT}f(r_s,t) = Y(r_s,t) - \hat{G}(r_s,t)$$

58 ⌐

Find filters $f_{sk}(t)$ which will map the noise in a window at the beginning or end of trace s, to the noise in the same window in trace k. The windows are chosen to be where the signal has negligible amplitude.

59 ⌐

Apply the filters to the whole of $\widehat{MT}f(r_s,t)$ to compute estimates of the noise on each channel:
$$\widehat{MT}f(r_k,t) = f_{sk}(t) * \widehat{MT}f(r_s,t)$$

60 ⌐

Subtract the estimated noise from the deconvolved data to obtain an estimate of the impulse response on each channel:
$$\bar{G}(r_k,t) = Y(r_k,t) - \widehat{MT}f(r_k,t)$$

62 ⌐

Apply curve fitting to the estimated impulse responses to recover smooth impulse responses
$$\hat{G}(r_k,t)$$

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6914433 B, Wright

**Non-patent literature cited in the description**

- **Strack, K.-M.** Exploration with deep transient electromagnetics. Elsevier, 1992, 373
- **Wright, D. ; Ziolkowski, A.** Suppression of noise in multi transient EM data. *Expanded Abstracts, SEG San Antonio Annual Meeting,* 2007
- **Ziolkowski, A. ; Hobbs, B.A. ; Wright, D.** Multitransient electromagnetic demonstration survey in France. *Geophysics,* 2007, vol. 72, 197-209
- **Norman Wiener.** Time Series. The MIT Press, 1949